(19) Europäisches Patentamt / European Patent Office / Office européen des brevets

(11) **EP 3 051 467 A1**

(12) # EUROPEAN PATENT APPLICATION

(43) Date of publication:
03.08.2016 Bulletin 2016/31

(51) Int Cl.:
*G06Q 10/02* (2012.01)   *G06Q 50/14* (2012.01)

(21) Application number: 15290023.9

(22) Date of filing: 02.02.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Amadeus S.A.S.**
**06410 Biot (FR)**

(72) Inventors:
• **Robini, Michael**
**06200 Nice (FR)**

• **Rubsamen, Roman**
**83600 Frejus (FR)**
• **Pioger, Aurelien**
**06000 Nice (FR)**

(74) Representative: **Samson & Partner Patentanwälte mbB**
**Widenmayerstraße 6**
**80538 München (DE)**

(54) **Incorporation of revenue impact of ancillary services into revenue-driven inventory system**

(57)    An apparatus, program product and method perform availability determinations in an inventory system by adjusting a base yield associated with a travel product based upon a revenue associated with one or more ancillary services associated with the travel product. By doing so, the price and/or availability of the travel product may be modified based upon a revenue impact of the ancillary service(s).

**FIG. 1**

EP 3 051 467 A1

**Description**

**Field of the Invention**

Embodiments of the invention relate generally to computers and computer software, and more specifically, to the use of computers and computer software in connection with revenue-driven inventory management.

**Background of the Invention**

Inventory management of extremely perishable goods or resources of service industries that are, at one moment, lost if not sold, is a challenge in many service industries. For example, in the travel industry, service components such as hotels and airplane flights have limited resources (e.g., a fixed number of hotel rooms or a fixed number of seats), and as such, when a hotel room or a seat on an airplane flight goes unused, that unused resource represents a loss of revenue to a travel provider. Nonetheless, it is often the case that some resources that are booked or purchased by a customer will not be used, e.g., due to a cancelation by the customer or a change in the customer's itinerary. Business customers in particular may be subject to changing circumstances that may require changes in their travel plans. To account for the possibility that some booked resources will go unused, resources may be intentionally overbooked with the goal of optimizing resource usage; however, doing so also comes with the potential detriment to goodwill and increased costs associated with accommodating customers when all customers cannot be accommodated by the available resources.

Inventory systems in some service industries, in an attempt to optimize resource usage as well as optimize revenue, employ revenue-driven and technically complex functionality referred to as revenue management or yield management. For example, some inventory systems interface with and/or incorporate revenue management systems that incorporate forecasting and optimization functionality, with the former used to forecast or predict future demand, and the latter used to optimize availability (e.g., how much of a resource, e.g., a seat on a flight, will be offered at different price points).

In addition, in some service industries, ancillary services represent an increasing source of revenue. In the travel industry, for example, airlines are increasingly deriving revenue from add-on services such as checked bags, priority boarding, beverage/meal services, seat upgrades, etc. Ancillary service revenue, however, is conventionally not considered in connection with inventory management, which may lead to inaccurate forecasts and suboptimal inventory management.

**Summary of the Invention**

The invention addresses these and other problems associated with the prior art by providing an apparatus, program product and method that perform availability determinations in an inventory system by adjusting a base yield associated with a travel product based upon a revenue associated with one or more ancillary services associated with the travel product. By doing so, the price and/or availability of the travel product may be modified based upon a revenue impact of the ancillary service(s).

According to one aspect of the invention, availability for a travel product may be determined. In an inventory system, an availability request is received from a reservation system. The availability request is responded to with the inventory system by determining availability for the travel product, where determining the availability for the travel product includes determining a base yield for the travel product, determining a price associated with at least one ancillary service associated with the travel product, determining a revenue associated with the at least one ancillary service associated with the travel product using the determined price, adjusting the base yield for the travel product based upon the determined revenue to thereby determine an updated yield, and determining the availability for the travel product using the updated yield. In addition, a response to the availability request is returned from the inventory system to the reservation system based upon the updated yield, where the response alters one or both of a price or availability of the travel product determined based solely on the base yield.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there are described example embodiments of the invention.

**Brief Description of the Drawings**

FIGURE 1 is a block diagram of components in a data processing system consistent with embodiments of the invention.

FIGURE 2 is a block diagram of the inventory system referenced in Fig. 1.

FIGURE 3 is a graph of an example revenue curve, and illustrating an availability determination operation.

FIGURE 4 is a block diagram of an example passenger service system capable of processing availability requests in a manner consistent with the invention.

FIGURE 5 is a block diagram of the inventory system referenced in Fig. 4.

FIGURE 6 is a flowchart illustrating an example sequence of operations for a determine availability routine executed by the availability determination module of Fig. 5.

FIGURE 7 is a flowchart illustrating an example sequence of operations for an aggregate routine executed by the aggregation module of Fig. 5.

**Detailed Description**

Embodiments consistent with the invention perform availability determinations in an inventory system by adjusting a base yield associated with a travel product, e.g., a flight or a flight segment, based upon a revenue associated with one or more ancillary services associated with the travel product.

An ancillary service, which may also be referred to herein as a chargeable Special Service Requirement (SSR), may be considered to include various services that are charged to a customer, but that are generally not incorporated into the principal ticket cost and/or used in availability determinations based upon the principal travel product that is purchased. Examples of ancillary services associated with a travel product include but are not limited to baggage services (e.g., checked luggage, oversize luggage, weight excesses, etc.), pet services (e.g., travel for a pet), meal services (e.g., pre-purchased meals, special meal requests, etc.), beverage services (e.g., pre-purchased drinks), entertainment services (e.g., in-flight entertainment fees), priority boarding services (e.g., right to board earlier), seat upgrade services (e.g., seats with additional legroom or in more desirable locations), etc. Additional ancillary services may be standalone, yet purchaseable along with a travel product subject to a yield determination, e.g., for a flight, services such as lounge access, car rental, hotel bookings, etc.

Of note, the International Air Transport Association (IATA) has developed a unified format to manage fees collected around a ticket (but not coming from the ticket itself), referred to as an Electronic Miscellaneous Document (EMD). An EMD may be a standalone EMD (S-EMD) that is not specific to a particular air segment (e.g., lounge access, car rental, hotel booking), or may be an associated EMD (A-EMD) that is linked to a particular air segment (e.g., a vegetarian meal on a flight, priority boarding, extra legroom, etc.). As such, in some embodiments ancillary services may be represented by one or more EMDs.

The hereinafter-described embodiments will focus on an airline-oriented application in which a travel product is for travel on an airplane flight, e.g., on a travel vehicle such as a plane, and the seats on that flight represent limited resources capable of being booked by customers and subject to availability requests. It will be appreciated, however, that the principles of the invention may be applied to other types of travel products, e.g., including services associated with hotels, rental cars, cruises, trains, buses, theaters, attractions, ticketed events, etc., as well as combinations thereof, which are subject to limited resources that potentially may go unused at a particular point in time. Therefore, the invention is not limited to the particular airline-oriented application disclosed herein.

As will become more apparent below, in some embodiments consistent with the invention, availability for a travel product may be determined. In an inventory system, an availability request may be received from a reservation system, and the availability request may be responded to with the inventory system by determining availability for the travel product. Determining the availability for the travel product may include determining a base yield for the travel product, determining a price associated with at least one ancillary service associated with the travel product, determining a revenue associated with the at least one ancillary service associated with the travel product using the determined price, adjusting the base yield for the travel product based upon the determined revenue to thereby determine an updated yield, and determining the availability for the travel product using the updated yield. A response to the availability request may then be returned from the inventory system to the reservation system based upon the updated yield, where the response alters one or both of a price or availability of the travel product determined based solely on the base yield.

In some embodiments, the travel product comprises a flight. In addition, some embodiments further determine a bid price associated with the travel product, where determining availability for the travel product using the updated yield includes comparing the updated yield to the bid price. In some such embodiments, determining the bid price comprises, with the inventory system, retrieving the bid price from a revenue management system.

In some embodiments, the availability request specifies at least one parameter, where the at least one parameter includes one or more of an origin, destination, point of sale or booking class, and where determining the base yield comprises accessing a yield database to retrieve a yield matching the at least one parameter of the availability request. In some embodiments, the ancillary service is a baggage service, a pet service, a meal service, a beverage service, a priority boarding service, or a seat upgrade service. In addition, in some embodiments adjusting the base yield for the travel product based upon the determined revenue includes summing the base yield with the determined revenue.

In some embodiments, the ancillary service and the price are stored in a Passenger Name Record (PNR) in the reservation system, and the availability request identifies the ancillary service and the price. In addition, in some embodiments, determining the revenue further comprises determining a cost factor associated with the ancillary service, and determining the revenue as a product of the cost factor and the determined price. Furthermore, in some such embodiments, the cost factor is stored in a cost factor database that associates ancillary services with cost factors, and cost factors associated with a plurality of ancillary services associated with the travel provider may be managed in response to user input from a travel provider.

Some embodiments further monitor one or more sources of booking data to detect historical prices for a plurality of ancillary services associated with a plurality of bookings and maintain an ancillary service historical price database by aggregating the historical prices detected from the monitoring of the one or more sources of booking data. In such embodiments, determining the price associated with the ancillary service may include accessing the historical price database.

In addition, in some embodiments, monitoring the one or more sources of booking data comprises monitoring a ticket feed and an Electronic Miscellaneous Document (EMD) feed for historical prices for ancillary services. In some such embodiments, the ticket and EMD feeds are each a daily feed from a ticketing system, and the ticket and EMD feeds may be reconciled to identify ancillary services in the EMD feed that are linked to tickets in the ticket feed. Furthermore, in some such embodiments aggregating the historical prices comprises aggregating historical prices based upon one or more of ancillary service type, origin, destination, booking class or point of sale, and maintaining the ancillary service historical price database further includes determining an average price from the aggregated historical prices and updating the ancillary service historical price database using the determined average price.

In some such embodiments, the availability request identifies the ancillary service, and accessing the ancillary service historical price database to determine the price includes accessing the ancillary service historical price database using the ancillary service identified in the availability request.

Some embodiments determine the price associated with the ancillary service by performing a dynamic call to a pricing system. In addition, in some embodiments, the response provides access to a booking class that is unavailable when availability is determined based solely on the base yield. Further, in some embodiments, the availability request is generated in response to an addition, update or cancellation of an ancillary service associated with previously booked travel product in the reservation system.

Some embodiments may also include an apparatus including at least one processor and program code configured upon execution by the at least one processor to determine availability for a travel product in any of the manners discussed herein. Some embodiments may also include a program product including at least one non-transitory computer readable medium and program code stored on the at least one computer readable medium and configured upon execution by at least one processor to determine availability for a travel product in any of the manners discussed herein.

Other variations and modifications will be apparent to one of ordinary skill in the art.

Hardware and Software Environment

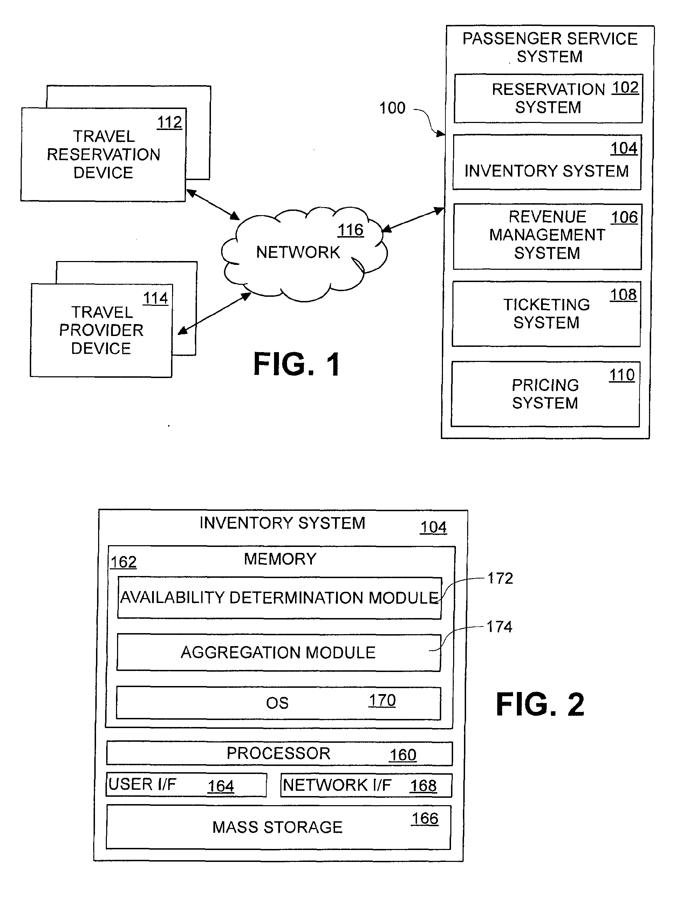

Turning now to the drawings, wherein like numbers denote like parts throughout the several views, Fig. 1 illustrates a data processing system including one or more devices and/or systems that may be used to implement the various features of the invention. A passenger service system (PSS) 100 may include a number of systems including a reservation system 102, an inventory system 104, a revenue management system 106, a ticketing system 108 and a pricing system 110, and may be interfaced to one or more travel reservation devices 112 and/or travel provider devices 114 (as well as between the various systems 102-110) via one or more communication networks 116, where the communication network may comprise the Internet, a local area network (LAN), a wide area network (WAN), a cellular voice/data network, one or more high speed bus connections, and/or other such types of communication networks and combinations thereof. Each travel reservation device 112 may be used, for example, to enable a reservation agent (e.g., travel agency, traveler, or other such travel reservation service) to initialize a reservation session with the reservation system 102 to communicate a booking request and/or other such relevant data to the reservation system 102. The travel reservation device 112 may be a personal computing device, desktop computer, laptop computer, tablet computer, thin client terminal, smart phone and/or other such computing device. Likewise, each travel provider device 114 may be used, for example, to enable travel provider personnel to access the various systems in PSS 100, e.g., gate agents, ticketing agents, management, etc.

Consistent with embodiments of the invention, a reservation agent may interface with the reservation system 102 using the travel reservation device 112 in a reservation session to provide data for a booking request. In turn, the reservation system interfaces with inventory system 104, which in turn interfaces with revenue management system 106 to determine availability for the booking request. While the reservation system 102, inventory system 104, revenue management system 106, ticking system 108 and pricing system 110 are described herein as separate entities, the invention is not so limited. In some embodiments, various hardware, software components, and/or sequences of operations described with respect to systems 102-110 may be combined into other systems, omitted from some systems, or split into multiple systems. Furthermore, in some embodiments some or all of systems 102-110 may be components of a Global Distribution System (GDS).

Turning now to Fig. 2, this figure provides a block diagram that illustrates the components of the one or more servers of inventory system 104 of Fig. 1 that are related to implementing at least a portion of the herein-described functionality. The inventory system 104 includes at least one processor 160 including at least one hardware-based microprocessor and a memory 162 coupled to the at least one processor 160. The memory 162 may represent the random access memory (RAM) devices comprising the main storage of inventory system 104, as well as any supplemental levels of memory, e.g., cache memories, non-volatile or backup memories (e.g., programmable or flash memories), read-only memories, etc. In addition, memory 162 may be considered to include memory storage physically located elsewhere in the inventory system 104, e.g., any cache memory in a microprocessor, as well as any storage capacity used as a virtual memory, e.g., as stored on a mass storage device 166 or on another computer coupled to the inventory system 104.

For interface with a user or operator, the inventory system 104 may include a user interface 164 incorporating one or more user input/output devices, e.g., a keyboard, a pointing device, a display, a printer, etc. Otherwise, input may be received via another computer or terminal (e.g., any of systems 102, 106, 108 or 110) over a network interface 168 coupled to the communication network 116. The inventory system 104 also may be in communication with one or more mass storage devices 166, which may be, for example, internal hard disk storage devices, external hard disk storage devices, external databases, storage area network devices, etc.

The inventory system 104 typically operates under the control of an operating system 170 and executes or otherwise relies upon various computer software applications, components, programs, objects, modules, engines, data structures, etc., including for example, an availability determination module 172, which may determine availability in response to availability requests from reservation system 102, and an aggregation module 174, which may aggregate ancillary service prices.

Various additional applications, components, programs, objects, modules, etc. may also execute on one or more processors in another computer coupled to the inventory system 104 via the communication network 116, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

Incorporation of Revenue Impact of Ancillary Services Into Revenue-Driven Inventory System

The travel industry, and in particular, the airline industry, derives an increasing percentage of its revenue from ancillary services such as baggage services, pet services, meal services, beverage services, priority boarding services, seat upgrade services, etc. However, conventionally the revenue derived from such services is not accounted for in the inventory systems that determine the availability of flights or other travel products with which such ancillary services are associated.

In particular, many conventional inventory systems currently in use are revenue-driven, and rely on revenue considerations when controlling availability of a limited resources such as a seat on a flight. When determining availability, e.g., in response to an availability request made by a reservation system, two data values are generally used to decide if a seat is available or not: the bid price and the yield. The bid price is generally computed by a revenue management system, generally based upon a demand forecast. The yield, on the other hand is generally the association of a monetary value, and a set of criteria, corresponding to a seat (e.g., origin, destination, flight number, booking class, etc.), and generally represents the airline's expected revenue in case the associated seat is sold within a ticket.

Put another way, bid price may be considered to be a net value for an incremental seat, spot or place (also referred to as an inventory item) on a particular flight/leg/cabin in an airline network. The bid price may be considered to be the marginal value of a given flight/leg/cabin , also referred to as minimum acceptable net revenue, hurdle price, shadow price or dual cost. The bid price is generally the minimum revenue at which an airline wishes to sell the inventory item, and is typically provided as a list of pairs <bid price value, item index> meaning that for selling the next remaining inventory item equal to the item index value, the minimum revenue of the bid price value is expected. The current item index corresponds to the number of remaining inventory items for a given leg and cabin at a given time.

Yield, in contrast, may be a value generally defined for each booking class of a given segment. The yield may be considered to be an estimation of how much revenue the carrier (e.g., airline) receives from a sale in the associated booking class and segment. Of note, the embodiments discussed hereinafter will focus on yield calculated at the segment level in this document. However, it will be appreciated that calculating yield at other levels, e.g., the origin-destination level, may be used in other embodiments, so the invention is not limited to this particular implementation.

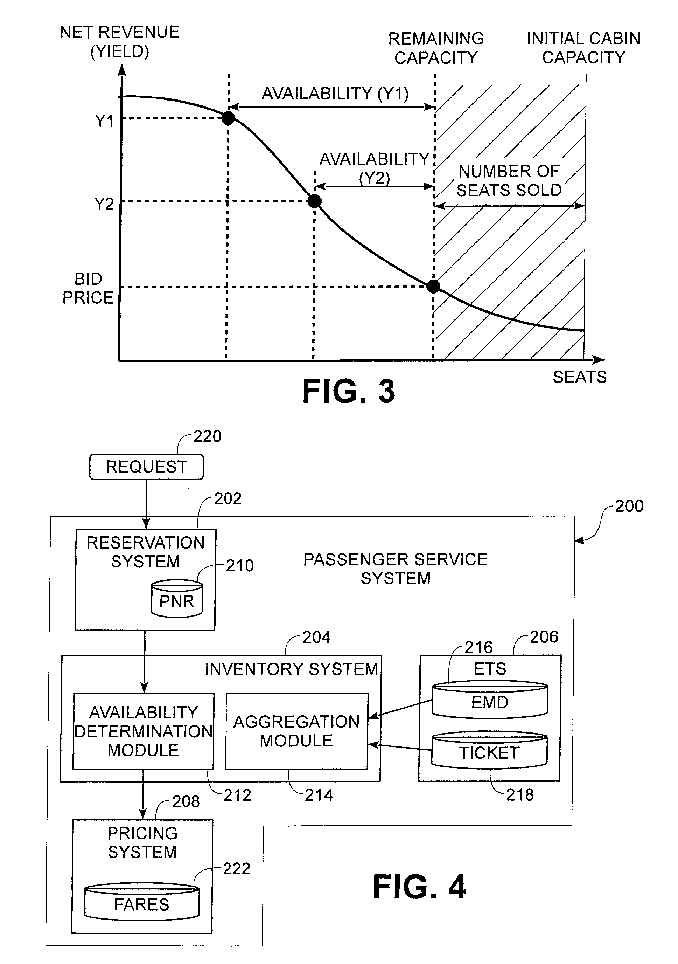

Fig. 3 illustrates the relationship between bid price and yield within the context of an availability determination, and based on a revenue curve associated with a cabin on a flight segment. In general, the bid price is set at the intersection of the remaining capacity of the cabin and the revenue curve, such that the bid price increases as additional seats are sold. The number of seats available at any given time depends on the difference between the yield and the current bid price, whereby if the yield is less than the bid price, no seat is available, and if the yield is greater than the bid price, availability is greater than zero and the value is based on the difference between yield and bid price. Thus, as illustrated in Fig. 3, the availability at yield Y1 is higher than at yield Y2 when the bid price is set at the level shown in the figure.

As noted above, yield is a monetary value, generally representing the average revenue associated with a seat, in case this seat is sold. Consequently, a yield is the combination of a set of criteria (Origin, Destination, Point of sale, Booking class, etc.), and a value, with a currency. For instance, Tables I, II and III illustrate example generic, city level, and airport level yields that might be used for a trip from London to New York, for a point of sale (POS) located in Europe, and for the set of booking classes A,B,C,D,F,Y and V:

Table I: Generic yield between Europe and USA, with POS in Europe

| Origin | Destination | Point of sale | Booking classes | Value (USD) |
|--------|-------------|---------------|-----------------|-------------|
| EUR | USA | GEO=EUR | A | 1150 |
| | | | B | 1050 |

(continued)

| Origin | Destination | Point of sale | Booking classes | Value (USD) |
|--------|-------------|---------------|-----------------|-------------|
|        |             |               | C               | 900         |
|        |             |               | D               | 870         |
|        |             |               | F               | 800         |
|        |             |               | Y               | 730         |
|        |             |               | V               | 680         |

Table II: Yield at city level, with a specific POS located in the UK

| Origin | Destination | Point of sale | Booking classes | Value (USD) |
|--------|-------------|---------------|-----------------|-------------|
| LON    | NYC         | GEO=UK        | A               | 1180        |
|        |             |               | B               | 1050        |
|        |             |               | C               | 980         |
|        |             |               | D               | 890         |
|        |             |               | F               | 820         |
|        |             |               | Y               | 750         |
|        |             |               | V               | 680         |

Table III: Yield at airport level, with a generic POS in Europe

| Origin | Destination | Point of sale | Booking classes | Value (USD) |
|--------|-------------|---------------|-----------------|-------------|
| LHR    | JFK         | GEO=EUR       | A               | 1250        |
|        |             |               | B               | 1080        |
|        |             |               | C               | 900         |
|        |             |               | D               | 875         |
|        |             |               | F               | 870         |
|        |             |               | Y               | 735         |
|        |             |               | V               | 690         |

Consider an example availability request, with an origin (LHR), a destination (JFK), a point of sale (UK) and a booking class (F), a yield retrieval process may return a yield that matches the criteria of the request. Generally, an airline will give a higher weight to the point of sale than to the origin and destination, and as such, the yield returned based upon this example availability request, and considering the yields illustrated in Tables I-III would likely be taken from the yields in Table II, resulting in a returned yield of:

LON,NYC,GEO=UK,F,820,USD

It will be appreciated that, in general, the accuracy of the bid price and the yield impact the accuracy of an availability determination. However, as noted above, the revenue associated with ancillary services (which may also be referred to hereinafter as chargeable Special Service Requirements (SSR)) is not taken into account in revenue-driven inventory management.

Embodiments consistent with the invention, on the other hand, do consider the financial impact of ancillary services by increasing a base yield determined for a travel product in the manner above to incorporate a value reflective of the revenue associated with any ancillary services associated with the travel product, resulting in the generation of an updated yield that incorporates the financial impact of any ancillary services in the yield used to determine availability for the travel product. For example, an updated yield may be determined as follows:

$$UY = BY + ASR_1 + ASR_2 + \ldots + ASR_N,$$

where UY is updated yield, BY is base yield, and $ASR_i$ is the revenue for an ancillary service i.

As such, the accuracy of a yield used in an availability determination is increased, generally resulting in an accuracy improvement for the availability determination itself. Furthermore, since the increase in the yield will generally lead to higher availability, the revenue of a travel provider is generally improved in some instances.

Integration of ancillary service revenue into an availability determination, however, is not trivial in nature, and necessitates a number of technical solutions to the technical problems that are presented. First, availability determinations in the airline industry are generally handled within an inventory system, and ancillary service information related to a booking is generally maintained by a reservation system and not made available for an inventory system. As such, one technical solution utilized by the herein-described embodiments is that of making ancillary service information available to an inventory system for the purpose of modifying a base yield to account for the financial impact of ancillary service revenue. Second, ancillary services may or may not be priced at the time of an availability determination for a travel product, so another technical solution utilized by the herein-described embodiments is that of determining a price for an ancillary service that has not been priced. Third, even if an ancillary service is priced, the revenue associated with an ancillary service is not equal to the price (since there is typically a cost associated with providing the service), so another technical solution utilized by the herein-described embodiments is that of determining a revenue for an ancillary service from a price determined therefor.

In general, embodiments consistent with the invention may be used to transform data reflective of a particular customer's booked ancillary services into a more accurate availability determination for a service component upon which that customer is booked, thereby further optimizing revenue-driven inventory management for an airline or other supplier of limited service resources, and potentially resulting in a different availability outcome based upon the presence or absence of ancillary services booked with a particular travel product.

In some embodiments, the aforementioned technical problems may be addressed in a number of manners. For example, to address the inaccessibility of ancillary service information, data flows may be established between various systems, including, for example, an inventory system (where availability determinations are performed), a reservation system (where a passenger name record (PNR) for a booking and the ancillary service information is stored), a ticketing system (where past tickets, including past ancillary service price data, is available), and a pricing system (where current ancillary service prices are stored, e.g., for retrieval using an FXG cryptic entry). Given the interaction of these systems, therefore, an airline IT provider may be uniquely positioned to implement the herein-described functionality.

To address the potential unavailability of ancillary service price information at the time of an availability request, it may be desirable to support one or both of (1) a dynamic access to a pricing system to obtain a current price for an ancillary service and (2) a dynamic access to an ancillary service historical price database to obtain a historical price for an ancillary service that is based on the aggregation of historical prices detected from monitoring one or more sources of booking data. Furthermore, to address the need to ultimately determine ancillary service revenue, it may be desirable to support a determination of ancillary service revenue given an ancillary service price.

Now turning an example embodiment of the invention, Fig. 4 illustrates an example passenger service system 200 including a reservation system 202, inventory system 204, electronic ticketing system (ETS) 206 and pricing system 208. For the purposes of this example embodiment, an ancillary service is referred to as an SSR, which is generally stored or otherwise identified by a passenger name record (PNR) in a PNR database 210 in reservation system 202.

Inventory system 204 includes two modules related to availability determinations that incorporate the financial impact of ancillary services. The first, an availability determination module 212, is used to perform availability determinations. The second, an aggregation module 214, is used to aggregate historical ancillary service prices for use in determining a historical SSR price when an SSR associated with a travel product is not priced. As will become more apparent below, aggregation module 214 may aggregate historical price data based upon monitoring one or more feeds, e.g., an EMD feed 216 and a ticket feed 218 from ETS 206.

As will also become more apparent below, availability determinations by availability determination module 212 may be initiated in response to an external availability request 220, e.g., from a travel agent or website, and made to reservation system 202, which are subsequently forwarded to module 212, but supplemented by SSR information, e.g., as is stored in a PNR database 210. The availability determination is then made based in part upon an SSR price, which may be provided with the supplemented availability request from the reservation system (if already priced), from pricing system 208 (if the price is filed and maintained in a fares database 222) and/or from aggregation module 214.

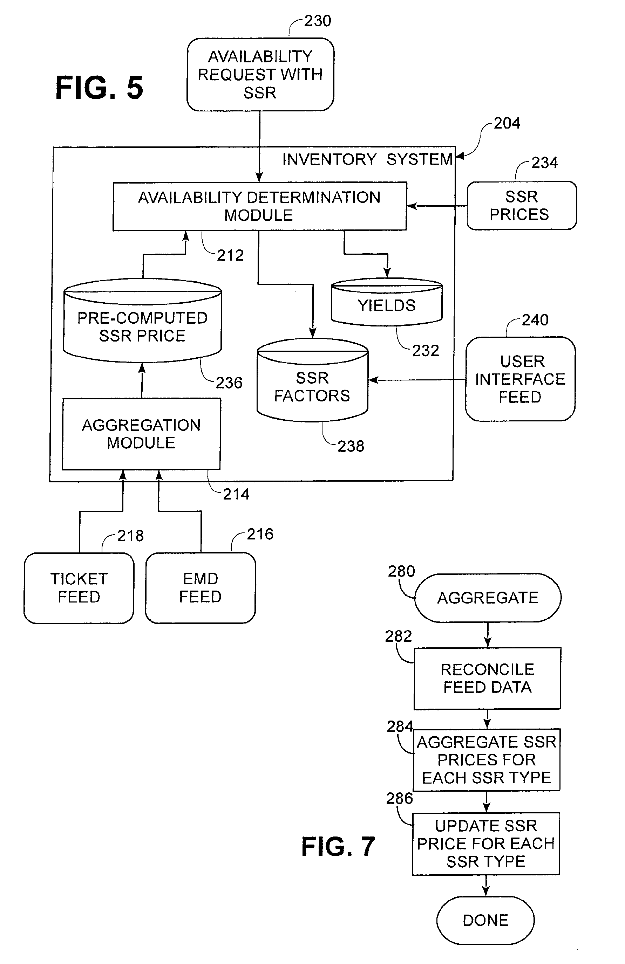

Fig. 5 illustrates one implementation of inventory system 204 in greater detail. In particular, availability determination module 212 is shown receiving a supplemented availability request 230 incorporating SSR information (from reservation system 202). In addition, a base yield associated with the travel product may be retrieved from a yields database 232 (e.g., as provided by a revenue management system). Further, as will become more apparent below, determination of the SSR revenue to be used to increase the base yield may rely on SSR prices obtained from request 230, from SSR prices 234 from pricing system 208 and/or from historical SSR prices, e.g., as stored in a pre-computed SSR price database 236. Database 236 is populated by aggregation module 214, e.g., from one or more feeds such as feeds 216, 218. As will also become more apparent below, derivation of SSR revenue from SSR prices in module 212 may be performed in some embodiments using SSR factors (also referred to herein as cost factors) stored in an SSR factor database 238 that is managed based upon a user interface feed 240.

In the embodiment of Figs. 4-5, depending on the booking order between a travel product (i.e., one or more air segments) and an SSR, four different possibilities exist:

- the SSR is booked or updated before booking the travel product, and is priced;

- the SSR is booked or updated before booking the travel product, but is not priced;

- the SSR is booked or updated after booking the travel product, and is priced; and

- the SSR is booked or updated after booking the travel product, but is not priced;

When an SSR is booked or updated before booking the travel product (also referred to herein as the trip), it is desirable to provide the SSR information to inventory system 204 at availability determination time, in order to use this information to tune the availability response accordingly. When an SSR is booked or updated after booking the travel product, however, a PNR re-evaluation may be performed at the end of the transaction (EOT). Indeed, as a result of such a re-evaluation, inventory system 204 in some embodiments may propose an upgraded booking class to a customer, in case a chargeable SSR is requested after the travel product booking, since the SSR will bring more revenue to the airline. On the contrary, an SSR update may also result in some embodiments in an SSR cancellation, and re-evaluation of the availability of a booking if an SSR is cancelled may result in a customer being downgraded, or even rejected.

Conventionally, no SSR information is conveyed from a reservation system to an inventory system. In the illustrated embodiment, however, reservation system 202 may provide SSR information to inventory system 204, e.g., in connection with an availability request (also referred to herein as a supplemented availability request). In one embodiment, for example, the SSR information may include, for each SSR associated with an availability request, an SSR type (e.g., as designated by an alphanumeric code such as an RFISC (Reason For Issuance SubCode)) and, if available, an associated SSR price (if the SSR has already been priced). The SSR price may be expressed using the airline currency (which is also generally the same as the yield currency). If another currency is used, the exchange rate may also be retrieved dynamically from an external, official source in case of a new SSR booking, or retrieved from an internal database (e.g., PNR database 210) in the case of an SSR update. In one embodiment, for example, SSR data may be transferred from PNR database 210 to inventory system 204 using a key/value vector, with the key being the SSR type (RFISC), and the value being the associated price (if available).

Once the SSR information is conveyed to inventory system 204 by reservation system 202, the SSR information may be used for an availability determination by module 212. Generally, a response is returned to reservation system 202, and subsequently to the original requester, indicating whether availability exists, which may then be handled in a manner similar to conventional responses to availability requests, as will be apparent to one of ordinary skill in the art having the benefit of the instant disclosure.

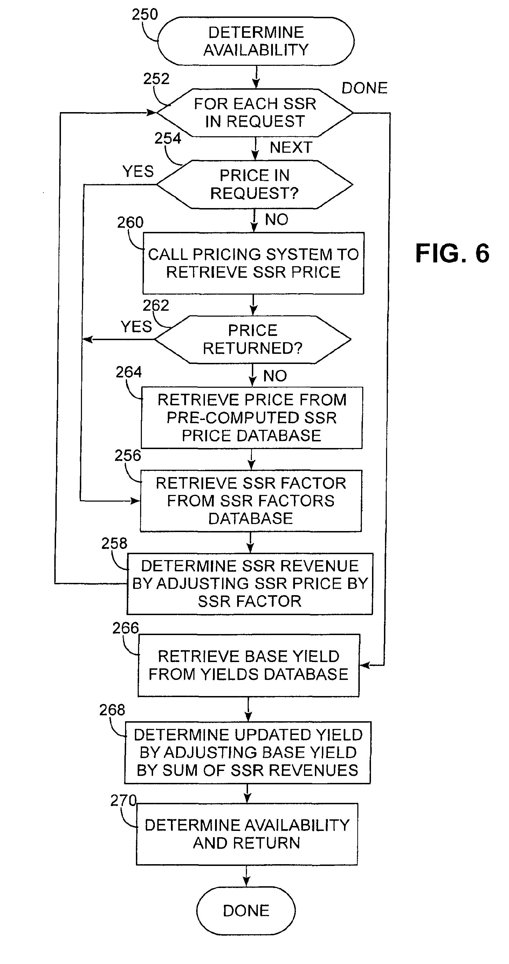

For example, Fig. 6 illustrates an example determine availability routine 250 that may be executed by module 212 of inventory system 204 in an embodiment consistent with the invention. Routine 250 begins in block 252 by initiating a FOR loop to process each SSR identified in a supplemental availability request. For each such SSR, block 254 determines whether a price for the SSR was provided in the request. If so, block 254 passes control to blocks 256-258 to determine an SSR revenue from the SSR price. In one embodiment discussed hereinafter, for example, the SSR revenue may be determined by retrieving an SSR factor from SSR factors database 238 (Fig. 5) in block 256 and adjusting the SSR price by the SSR factor in block 258.

Control then returns to block 252 to process any additional SSRs identified in the supplemented availability request. Returning to block 254, if the SSR price is not provided in the request, then control passes to block 260 to call pricing system 208 (Fig. 4) to attempt to retrieve the SSR price. The call may be a dynamic call performed interactively during the availability determination, and in some embodiments, caching may be used to improve performance, and potentially avoid similar calls to the pricing system in a short time frame.

Block 262 next determines if the price was returned (e.g., if the SSR price was previously filed by the airline in the pricing system, such as with ATPCO). If so, control passes to blocks 256 and 258 to determine the SSR revenue in the manner described above. If not, however, control passes to block 264 to retrieve the SSR price from pre-computed SSR price database 236 (Fig. 5), and then to blocks 256 and 258 to determine the SSR revenue in the manner described above.

Once all SSRs identified in the supplemental availability request have been processed, block 252 passes control to block 266 to retrieve the base yield for the travel product associated with the booking/availability request from yields database 232 (Fig. 5). It will be appreciated that in some embodiments, average SSR revenue may already be built into the yields provided by an airline, and as such, in some embodiments the base yield may need to be "cleaned," whether dynamically during the availability determination, or prior to storing into yields database 232, in order to remove this SSR impact from the base yield. The SSR revenue that may be built into an airline's yields, however, will generally be appreciated to be independent of any particular customer's actual SSR bookings.

Block 268 next determines an updated yield by adjusting the base yield by the sum of the SSR revenues for the SSRs identified in the supplemental availability request. Block 270 then uses the updated yield (rather than the base yield) to determine availability for the request (e.g., by retrieving a bid price from the revenue management system and comparing the updated yield to the bid price), and return a response in a manner that will be apparent to one of ordinary skill in the art having the benefit of the instant disclosure. Routine 250 is then complete. In addition, it will be appreciated that, in view of the use of the updated yield in lieu of the base yield in the availability determination, the returned response, in at least some instances, will generally alter one or both of a price or availability of the travel product that would have been determined based solely on the base yield.

Returning to blocks 256-258, as noted above, determining an SSR revenue from an SSR price may be performed in a number of different manners in different embodiments consistent with the invention. In some embodiments, for example, revenue may be considered to be a fraction or percentage of the SSR price, e.g., based on an SSR factor $F_i$% for an SSR i. In some embodiments, the SSR factor may be fixed for all airlines, and may be fixed across all different types of SSRs. In other embodiments, however, airline-specific and/or SSR type-specific SSR factors may be used, such that SSRs for different airlines and/or different types of SSRs may be associated with different SSRs. Furthermore, in some embodiments, the SSR factors may be configurable by an airline or other entity. In still other embodiments, rather than fractions or percentages, numerical costs (whether reflective of overall costs, or broken down into components such as taxes, material costs, fuel costs, etc.) may be used to adjust SSR prices to obtain SSR revenues. Other manners of deriving a revenue from a price may also be used in other embodiments, as will be appreciated by one of ordinary skill in the art having the benefit of the instant disclosure, so the invention is not limited to the particular techniques disclosed herein.

In the illustrated embodiment, an airline that is aware of the costs corresponding to each SSR type may therefore be able to provide $F_i$ factors for all the SSR types relevant to that airline. The $F_i$ factors may include taxes, or any other costs that are not revenue. Thus, in this embodiment, and assuming that the price of an SSR i is $P_i$, an updated yield (UY) may be determined from a base yield (BY) as follows:

$$UY = BY + F1 \times P1 + F2 \times P2 + \ldots FN \times PN,$$

In the illustrated embodiment, the $F_i$ SSR factors are stored in inventory system 204 using a dedicated SSR factors database 238 (Fig. 5). The SSR factors may be stored using a key/value table, the key being the SSR type. An example table is shown below in Table IV:

Table IV: SSR factors table

| RFISC | SSR TYPE | SSR factors |
|-------|----------|-------------|
| 99L | BIKE | 0.73 |
| 0BS | PETC | 0.82 |
| SPQ | SPEQ | 0.90 |

where BIKE refers to bike on the plane, PETC refers to a pet in the cabin, and SPEQ refers to sporting equipment on the plane.

A minimal graphical interface 240 (Fig. 5) may be provided to enable an airline to manage this SSR factors database. For example, add, update and delete operations may be supported. In order to fill this table, an airline may determine the SSR factor of each of the SSR types based upon cost analysis of the airline's actual costs. For instance, in the above table, the percentage of the price corresponding to the costs of SSR 99L is: 1 - 0.73 = 27%, meaning that 27% of the price paid by the customer is not revenue for the airline.

In case the SSR factor is missing for a given SSR type, a number of different options may be used. For example, a fixed default SSR factor may be used. As another example, an SSR factor may be computed as an average of all other SSR factors (e.g., over all airlines or for a particular airline). As another example, an SSR factor of 1 may be used.

As one example of how ancillary service revenue may impact an availability determination in the herein-described embodiments, consider a customer seeking to book a trip (London to Singapore, into an economy booking class, say N) for two people. Assume the bid price is currently equal to 480 USD, and the yield of class N is $Yn = 420$ USD. So, considering the air segment only, there is currently no availability for class N, since the bid price is greater than the yield. On the other hand, since the trip is a honeymoon, the customer requests for this booking an SSR in order to have champagne on board. The customer pays 400 USD for this SSR, and assuming that the SSR factor entered by the airline for this SSR is 0.34, the revenue earned by the airline for this SSR would be: 400 x 0.34 = 136 USD. As such, this SSR will generate 136 USD of revenue for the airline, and this revenue will impact the yield value accordingly. The updated yield is: 420 + 136 = 556 USD, and since the updated yield is greater than the bid price (556 > 480), class N is now opened for booking by the customer.

As another example, assume this customer later cancels the SSR (no more champagne on board), a new availability determination may be performed after the PNR update, and the N class will no longer be available, resulting in the customer being re-booked in another economy booking class, higher than N. As such, it will be appreciated that in both instances, one or both of the price or availability of the trip is altered relative to what would have resulted had the availability determination been based solely on the base yield.

Now returning to block 254 of Fig. 6, as noted above, when the SSR type is known at availability determination time, but the associated price is unknown, different solutions may be employed to impact the base yield to account for SSR revenue. One solution described herein, as noted above, is making a dynamic call to a pricing system to retrieve an SSR price (block 260). Another solution described herein is accessing historical SSR price information maintained in a pre-computed SSR price database (block 264). It will be appreciated that these solutions are not exclusive, and can be used together or separate from one another (i.e., only one of the two solutions may be supported). In addition, while Fig. 6 prioritizes calls to a pricing system over accessing the pre-computing SSR price database, in other embodiments, pricing system calls may only be performed if the pre-computing SSR price database does not include relevant historical SSR price information (e.g., in the case of new or recently-added SSR types). Additional solutions to determine an SSR price may also be used, so the invention is not limited to the specific solutions disclosed herein, as will be appreciated by one of ordinary skill in the art having the benefit of the instant disclosure.

Now returning to Figs. 4-5, as noted above it may be desirable in some embodiments to aggregate historical SSR price information using aggregation module 214. In one embodiment, for example, an aggregated database may be built from past bookings data, e.g., both past tickets data (ticket feed 218), and past SSR data (EMD feed 216). Generally, this data is stored by ETS 206 (or in a revenue account system in some embodiments), into different databases that support exporting data via export files, e.g., on a daily basis or another time frame. In one embodiment, a LIFT file may be supported including daily flown tickets, and an EMD file may be supported including daily flown ancillary services.

Each ticket record in feed 218 and each SSR record in feed 216 may include, for example, a ticket identifier or number, as well as a price (including currency). Each SSR record may also include an SSR type.

Turning now to Fig. 7, an example, aggregate routine 280 executed by aggregation module 214 is illustrated. Routine 280 may be executed to monitor one or more sources of booking data to detect historical prices for SSRs associated with a plurality of bookings. Sources of booking data may include, for example, a ticketing system or other repository of bookings created on behalf of customers that book travel products with one or more airlines.

In one embodiment, for example, routine 280 may process booking data provided in a plurality of feeds, e.g., on a daily basis assuming the feeds are generated on a daily basis. Since tickets data and SSRs are coming from two different feeds/databases, routine 280 begins in block 282 by reconciling the feed data. The ticket ID may be used for reconciliation process since it is a common field to both feeds, and thus may be used to retrieve each of the SSRs linked to a given ticket (both standalone, S-EMD and associated SSR, A-EMD). In one embodiment, this reconciliation process may be performed on a daily basis, and output an enriched data feed.

Once reconciliation is achieved, block 284 may aggregate SSR prices in order to compute an associated average price, e.g., for a given set of criteria. This set of criteria may be flexible, and generally includes at least an SSR type (e.g., code or RFISC). Other criteria may include, but are not limited to, airport origin, airport destination, booking class, point of sale, etc. Once a set of criteria is determined (e.g., origin airport, destination airport, booking class, and RFISC), a parsing process may be performed on the enriched data feed described above. For each record, the RFISC, origin airport, destination airport and booking classes may be aggregated and the average SSR price may be computed by an iterative process. The average SSR price may then be considered to be computed once all of the data in the enriched feed has been parsed.

Next, in block 286, the resulting average price may be updated in the pre-computed SSR price database 236 (Fig. 5), such that the average prices are updated on a regular basis (e.g., a daily basis). One example table that may be used in database 236 may be based on a criteria such as origin, destination, booking class and SSR RFISC, as shown in Table V:

Table V: Example historical SSR price table

| Origin | Destination | Booking class | SSR code | Average price (USD) |
|--------|-------------|---------------|----------|---------------------|
| SIN | BKK | Y | 0B5 | 42.60 |
| HKG | SIN | C | 0G8 | 73.32 |
| FRA | LAX | N | 0K7 | 11.81 |

It will be appreciated, however, that other table configurations may be used, and that other criteria may be used store and organize SSR historical prices, such that SSR prices may be aggregated more specifically to particular scenarios or less specifically to cover wider scenarios. Thus, each time an availability request is sent from the reservation system to the inventory system with a non-priced SSR, a query may be performed to permit the inventory system to locate an associated SSR average price, based upon not only the SSR type, but also additional information associated with the booking or travel product, e.g., origin, destination, booking class, or other types of information that characterize a travel product. Thus, in some embodiments, one or more parameters from an availability request (e.g., origin, destination, point of sale, booking class, SSR type, etc.) may be used to access the pre-computed SSR price database 236 to retrieve a price matching the one or more parameters. In other embodiments, however, SSR prices may be aggregated only on SSR type, such that SSR prices are the same regardless of any parameters associated with an availability request.

This table may be built, as noted above, using an automatic averaging process. However, in some embodiments, it may also be desirable to provide a user interface to enable an airline to update the table if necessary. In addition, while the embodiment discussed above generates and stores new average SSR prices based upon feeds, in other embodiments the previously-stored averages may be combined with the new SSR prices when updating the database.

It will be appreciated that some of the features of the example embodiments of this invention may be used without the corresponding use of other features. In addition, various additional modifications may be made without departing from the spirit and scope of the invention. Therefore, the invention lies in the claims hereinafter appended.

## Claims

1. A method of determining availability for a travel product, the method comprising:

   in an inventory system, receiving an availability request from a reservation system;
   responding to the availability request with the inventory system by determining availability for the travel product, wherein determining the availability for the travel product includes:

   determining a base yield for the travel product;
   determining a price associated with at least one ancillary service associated with the travel product;
   determining a revenue associated with the at least one ancillary service associated with the travel product using the determined price;
   adjusting the base yield for the travel product based upon the determined revenue to thereby determine an updated yield; and
   determining the availability for the travel product using the updated yield; and

   returning a response to the availability request from the inventory system to the reservation system based upon the updated yield, wherein the response alters one or both of a price or availability of the travel product determined based solely on the base yield.

2. The method of claim 1, further comprising determining a bid price associated with the travel product, wherein determining availability for the travel product using the updated yield includes comparing the updated yield to the bid price, and wherein determining the bid price comprises, with the inventory system, retrieving the bid price from a revenue management system.

3. The method of claim 1 or 2, wherein the availability request specifies at least one parameter, wherein the at least one parameter includes one or more of an origin, destination, point of sale or booking class, and wherein determining the base yield comprises accessing a yield database to retrieve a yield matching the at least one parameter of the availability request.

4. The method of any of the preceding claims, wherein the travel product comprises a flight, and wherein the ancillary service is a baggage service, a pet service, a meal service, a beverage service, a priority boarding service, or a seat upgrade service.

5. The method of any of the preceding claims, wherein adjusting the base yield for the travel product based upon the determined revenue includes summing the base yield with the determined revenue.

6. The method of any of the preceding claims, wherein the ancillary service and the price are stored in a Passenger Name Record (PNR) in the reservation system, and wherein the availability request identifies the ancillary service and the price.

7. The method of any of the preceding claims, wherein determining the revenue further comprises determining a cost factor associated with the ancillary service and determining the revenue as a product of the cost factor and the determined price, wherein the cost factor is stored in a cost factor database that associates ancillary services with cost factors, and wherein the method further comprises, in response to user input from a travel provider, managing cost factors associated with a plurality of ancillary services associated with the travel provider.

8. The method of any of the preceding claims, further comprising:

   monitoring one or more sources of booking data to detect historical prices for a plurality of ancillary services associated with a plurality of bookings; and
   maintaining an ancillary service historical price database by aggregating the historical prices detected from the monitoring of the one or more sources of booking data;
   wherein determining the price associated with the ancillary service includes accessing the historical price database.

9. The method of claim 8, wherein monitoring the one or more sources of booking data comprises monitoring a ticket feed and an Electronic Miscellaneous Document (EMD) feed for historical prices for ancillary services, wherein the ticket and EMD feeds are each a daily feed from a ticketing system, wherein the method further comprises reconciling the ticket and EMD feeds to identify ancillary services in the EMD feed that are linked to tickets in the ticket feed, wherein aggregating the historical prices comprises aggregating historical prices based upon one or more of ancillary service type, origin, destination, booking class or point of sale, and wherein maintaining the ancillary service historical price database further includes determining an average price from the aggregated historical prices and updating the ancillary service historical price database using the determined average price.

10. The method of claim 8 or 9, wherein the availability request identifies the ancillary service, and wherein accessing the ancillary service historical price database includes accessing the ancillary service historical price database using the ancillary service identified in the availability request.

11. The method of any of claims 1-7, wherein determining the price associated with the ancillary service includes performing a dynamic call to a pricing system.

12. The method of any of the preceding claims, wherein the response provides access to a booking class that is unavailable when availability is determined based solely on the base yield.

13. The method of any of the preceding claims, wherein the availability request is generated in response to an addition, update or cancellation of an ancillary service associated with previously booked travel product in the reservation system.

14. An apparatus, comprising:

   at least one processor; and
   program code configured upon execution by the at least one processor and configured to implement at least a portion of an inventory system, the program code configured to determine availability for a travel product by performing any of the methods of claims 1-13.

**15.** A program product, comprising:

at least one non-transitory computer readable medium; and
program code stored on the at least one non-transitory computer readable medium and configured upon execution by at least one processor to implement at least a portion of an inventory system, the program code configured to determine availability for a travel product by performing any of the methods of claims 1-13.

PASSENGER SERVICE
SYSTEM

RESERVATION 102
SYSTEM

104
INVENTORY SYSTEM

REVENUE 106
MANAGEMENT
SYSTEM

TICKETING 108
SYSTEM

PRICING 110
SYSTEM

TRAVEL 112
RESERVATION
DEVICE

TRAVEL 114
PROVIDER
DEVICE

116
NETWORK

100

**FIG. 1**

INVENTORY SYSTEM        104

162        MEMORY

AVAILABILITY DETERMINATION MODULE — 172

AGGREGATION MODULE — 174

OS        170

PROCESSOR        160

USER I/F        164    NETWORK I/F        168

MASS STORAGE        166

**FIG. 2**

NET REVENUE
(YIELD)

REMAINING
CAPACITY

INITIAL CABIN
CAPACITY

AVAILABILITY (Y1)

Y1

AVAILABILITY
(Y2)

NUMBER OF
SEATS SOLD

Y2

BID
PRICE

SEATS

## FIG. 3

REQUEST — 220

RESERVATION
SYSTEM — 202

PASSENGER SERVICE
SYSTEM — 200

PNR — 210

INVENTORY SYSTEM — 204

AVAILABILITY
DETERMINATION
MODULE

AGGREGATION
MODULE

ETS — 216

EMD

TICKET — 218

206

212   214

PRICING
SYSTEM — 208

FARES — 222

## FIG. 4

FIG. 5

230

AVAILABILITY
REQUEST WITH
SSR

204

INVENTORY SYSTEM

234

SSR
PRICES

AVAILABILITY DETERMINATION
MODULE

212

PRE-COMPUTED
SSR PRICE

YIELDS

232

240

USER
INTERFACE
FEED

236

SSR
FACTORS

238

AGGREGATION
MODULE

214

218

TICKET
FEED

216

EMD
FEED

280

AGGREGATE

282

RECONCILE
FEED DATA

284

AGGREGATE SSR
PRICES FOR
EACH SSR TYPE

286

UPDATE SSR
PRICE FOR EACH
SSR TYPE

FIG. 7

DONE

**FIG. 6**

250 DETERMINE AVAILABILITY

252 FOR EACH SSR IN REQUEST — DONE

NEXT

254 PRICE IN REQUEST? — YES

NO

260 CALL PRICING SYSTEM TO RETRIEVE SSR PRICE

262 PRICE RETURNED? — YES

NO

264 RETRIEVE PRICE FROM PRE-COMPUTED SSR PRICE DATABASE

256 RETRIEVE SSR FACTOR FROM SSR FACTORS DATABASE

258 DETERMINE SSR REVENUE BY ADJUSTING SSR PRICE BY SSR FACTOR

266 RETRIEVE BASE YIELD FROM YIELDS DATABASE

268 DETERMINE UPDATED YIELD BY ADJUSTING BASE YIELD BY SUM OF SSR REVENUES

270 DETERMINE AVAILABILITY AND RETURN

DONE

Europäisches
Patentamt

European
Patent Office

Office européen
des brevets

# EUROPEAN SEARCH REPORT

**Application Number**

EP 15 29 0023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 608 134 A1 (AMADEUS [FR]) 26 June 2013 (2013-06-26) * abstract * * paragraphs [0003] - [0009] * * figures 1-2 * ----- | 1-15 | INV. G06Q10/02 G06Q50/14 |
| A | CA 2 836 736 A1 (AMADEUS SAS [FR]) 11 July 2014 (2014-07-11) * abstract * * page 1, line 5 - page 4, line 17 * ----- | 9 | |

**TECHNICAL FIELDS SEARCHED (IPC)**

G06Q

The present search report has been drawn up for all claims

| Place of search | Date of completion of the search | Examiner |
|---|---|---|
| The Hague | 10 July 2015 | De Smet, Michaël |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 29 0023

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2015

| Patent document cited in search report | | Publication date | Patent family member(s) | | Publication date |
|---|---|---|---|---|---|
| EP 2608134 | A1 | 26-06-2013 | EP US | 2608134 A1 2013166328 A1 | 26-06-2013 27-06-2013 |
| CA 2836736 | A1 | 11-07-2014 | AU CA | 2014200101 A1 2836736 A1 | 31-07-2014 11-07-2014 |

EPO FORM P0459

For more details about this annex : see Official Journal of the European Patent Office, No. 12/82